# EUROPEAN PATENT SPECIFICATION

(11) **EP 4 000 246 B1**
(45) Date of publication and mention of the grant of the patent: **01.01.2025**
(21) Application number: 20732541.6
(22) Date of filing: 09.06.2020
(51) Int. Cl.: H04N 23/51, H04N 23/698, H04N 23/81, H04N 25/40, G08B 13/196, G08B 13/191, G08B 29/18, H04N 7/18

(54) **SURVEILLANCE APPARATUS COMPRISING CAMERA DEVICE**
ÜBERWACHUNGSGERÄT MIT KAMERAVORRICHTUNG
APPAREIL DE SURVEILLANCE COMPRENANT UN DISPOSITIF DE CAMÉRA

(43) Date of publication of application: 25.05.2022
(73) Proprietor: Euroatlas GmbH, 28307 Bremen (DE)
(72) Inventor: APPEL, Patrick, 28307 Bremen (DE)
(74) Representative: Boco IP Oy Ab
(86) International application number: PCT/EP2020/065960
(87) International publication number: WO 2021/249625

(56) References cited:
- WO-A1-2010/120707
- DE-A1- 10 232 227
- DE-A1- 3 436 651
- US-A1- 2017 225 660
- ANONYMOUS: "Metal Tangential Full Cone Nozzle - Spray Nozzles, Full Cone Nozzles, Eductors & Air Nozzles - Sealpump UK", 19 October 2019 (2019-10-19), XP093158722, Retrieved from the Internet <URL:https://web.archive.org/web/20191019151230/http://www.sealpump.com:80/product/metal-tangential-full-cone-nozzle/>
- ANOMYMUS: "Wärtsila EUROATLAS GmbH", 3 April 2020 (2020-04-03), XP055772569, Retrieved from the Internet <URL:https://de.linkedin.com/company/jovyatlas-euroatlas-gesellschaft-f%C3%BCr-leistungselektronik-mbh> [retrieved on 20210204]
- ANOMYMUS: "Power Converter Products For Naval, Aviation and Land Applications 30 kVA Submarine Power Conversion Cabinet, Model 1026 Power Converter Products for Naval, Aviation and Land Applications", 5 September 2019 (2019-09-05), pages 1 - 12, XP055772122, Retrieved from the Internet <URL:https://cdn.wartsila.com/docs/default-source/marine-documents/segment/brochure-o-ea-power-converter-technology.pdf?sfvrsn=d80e8b45_8> [retrieved on 20210203]
- ANOMYMUS: "360° Advanced Situational Awareness Day & Night for Army Applications", 30 September 2018 (2018-09-30), pages 1 - 2, XP055724569, Retrieved from the Internet <URL:https://cdn.wartsila.com/docs/default-source/euroatlas-files/vision-systems/b6429-3_360-advanced-situational-awareness-leaflet-2018.pdf?sfvrsn=5de41244_6> [retrieved on 20200824]

## Description

### TECHNICAL FIELD

The present application generally relates to a surveillance apparatus. Furthermore, the present application relates especially to surveillance apparatus comprising camera device(s) for arrangements for vehicles operating in demanding environmental conditions.

### BACKGROUND

This section illustrates useful background information without admission of any technique described herein representative of the state of the art.

Different solutions exist for providing surveillance image data or a vision system for vehicles.

For example, a camera system where a wide field-of-view is generated by a camera mounted to a motorized gimbal which combines images captured at different times and different directions into a single aggregate image. This system relies on covering a wide field-of-view by changing the direction of the camera and is able to simultaneously capture images from the multiple cameras.

However, there are several aspects and demanding requirements that need to be considered for the design, development, and qualification of a camera system for military vehicles, for example.

A highly reliable and precisely engineered camera system is essential in meeting the mission objectives, and ensuring the safety and survival of the vehicle's crew in different operating modes and circumstances. Furthermore, precise and stable arrangement for cameras is extremely important.

Thus, a solution is needed to enable accurate, efficient, and reliable surveillance apparatus with advantageous mechanical arrangement for a vehicle.

Internet publication by Wärtsilä EUROATLAS GmbH, XP055772569, published on 3 April 2020 in Linkedln, retrieved from the Internet URL https://www.linkedin.com/company/jovyatlas-euroatlas-gesellschaft-f%C2%B0/oC3%BCr-leistunqselektronik-mbh/ discloses a 120° wide field of view camera housing for all weather.

Publication "Power Converter Products For Naval, Aviation and Land Applications 30 WA Submarine Power Conversion Cabinet, Model 1026 Power Converter Products for Naval, Aviation and Land Applications", XP055772122, published by Wärtsilä on 5 September 2019, and retrieved from the Internet URL: https://cdn.wartsila.com/docs/default-source/marine-documents/segment/brochure-o-ea-power-converter-technology.pdf?sfvrsn=d80e8b45 8 discloses a wide FOW dual channel camera housing, in which camera housing windows can be cleaned with water or air.

Patent application DE 102, 32 227 A1 discloses a camera system with a cleaning arrangement with a nozzle that can be moved between an out-of-use position and in-use or cleaning position.

Patent application DE 34 36 651 A1 discloses television cameras accommodated in a cooled housing. Compressed air is caused to flow into an annular groove to prevent dust and ash particles being deposited in the field of view of the camera.

Patent application US 2017/225660 A1 discloses an optical detection system for a motor vehicle and a device for cleaning such as system. The cleaning device comprises spray means and suction means.

Patent application WO 2010/120707 A1 discloses vehicle-mountable imaging systems, but does not concern cleaning thereof.

Publication ""360° Advanced Situational Awareness Day & Night for Army Applications", Published on 30 September 2018, XP055724569, and retrieved from the Internet URL: https://cdn.wartsila.com/docs/default-source/euroatlas-files/vision-svstems/b6429-3 360-advanced-situational-awareness-leaflet-2018.pdf?sfvrsn=5de41244 6 discloses a situational awareness system based on the same embedded platform of the driver day & night periscope system. Various embedded processing units can be connected and operate in a cluster. A number of different cameras and configurations are available.

### SUMMARY

Various aspects of examples of the invention are set out in the claims.

According to a first example aspect of the present invention, there is provided a surveillance apparatus comprising:
a housing with a front surface, wherein a camera device is arranged to operate through an opening of the front surface;
a spherical ring element comprising a protective window;
an inner ring element arranged at an inner side of the housing;
an outer ring element arranged at an outer side of the housing,
wherein the spherical ring element is arranged between the inner ring element and the outer ring element, and the inner and outer ring element are configured to allow pivotal movement of the spherical ring element;
the outer ring element comprising a circular groove arranged on inner circumference of the outer ring element and a plurality of nozzles operationally connected to the circular groove and directed circumferentially towards an outer surface of the protective window (6) for cleaning the protective window with liquid fluid or for cleaning or drying the protective window with air fluid; and
an outlet arranged on the front surface of the housing to guide the liquid fluid or air fluid to the circular groove of the outer ring element.

In an embodiment, in response to a control signal the fluid is changed between the air and the liquid.

In an embodiment, a plurality of camera devices are arranged and configured to provide combined image data on at least one channel, wherein the channel is associated with at least two camera devices with substantially same field-of-view (FOV) angles but different line-of-sight (LOS) angles, and a wide field of view image data is configured to be generated using the combined image data.

In an embodiment, the first channel is a longwave infrared (LWIR) channel and the second channel is a visible spectrum (VIS) channel.

In an embodiment, the apparatus comprises a housing comprising a front surface, wherein the plurality of camera devices are arranged.

In an embodiment, the at least two camera devices associated to the first channel are arranged vertically alongside each other.

In an embodiment, the at least two camera devices associated to the second channel are arranged vertically alongside each other.

In an embodiment, the at least two camera devices associated to the first channel are arranged horizontally alongside the at least two camera devices associated to the second channel.

In an embodiment, the camera device comprises at least one of the following: LWIR sensor, SWIR sensor, CMOS sensor, image Intensified CMOS, and CCD sensor.

In an embodiment, the housing is rotatably and/or tiltably arranged to a vehicle.

In an embodiment, rotation and/or tilting of the housing is controlled by the surveillance apparatus or its operator.

In an embodiment, a field-of-view (FOV) angle of the output data is 120°.

In an embodiment, the image data comprises video data and/or still image data.

In an embodiment, the apparatus further comprising:
a communication interface;
at least one processor; and
at least one memory including computer program code;
the at least one memory and the computer program code configured to, with the at least one processor, cause the apparatus to:
   control guidance of the fluid to the circular groove of the outer ring element.

In an embodiment, the at least one memory and the computer program code configured to, with the at least one processor, cause the apparatus to:
determine at least one control sequence; and
control guidance of the fluid to the circular groove of the outer ring element based on the at least one control sequence.

In an embodiment, the at least one control sequence is configured to control at least one of a liquid fluid or an air fluid.

In an embodiment, the liquid fluid is configured to be used for cleaning.

In an embodiment, the air fluid is configured to be used for cleaning or drying.

In an embodiment, the at least one memory and the computer program code configured to, with the at least one processor, cause the apparatus to:
determine at least one control sequence, wherein air fluid is activated for a predefined time period.

In an embodiment, the at least one memory and the computer program code configured to, with the at least one processor, cause the apparatus to:
determine at least one control sequence, wherein air fluid is activated for an undefined time period and to be disabled in response to another control sequence.

In an embodiment, the at least one memory and the computer program code configured to, with the at least one processor, cause the apparatus to:
determine at least one control sequence, wherein air fluid is activated based on route information so that air fluid is activated when entering dusty environment.

Different non-binding example aspects and embodiments of the present invention have been illustrated in the foregoing. The embodiments in the foregoing are used merely to explain selected aspects or steps that may be utilized in implementations of the present invention. Some embodiments may be presented only with reference to certain example aspects of the invention. It should be appreciated that corresponding embodiments may apply to other example aspects as well.

### BRIEF DESCRIPTION OF THE DRAWINGS

For a more complete understanding of example embodiments of the present invention, reference is now made to the following descriptions taken in connection with the accompanying drawings in which:
Fig. 1a shows a schematic picture of a surveillance apparatus, wherein some elements of the apparatus are shown according to a first example embodiment;
Fig. 1b shows a schematic picture of a surveillance apparatus from another angle, wherein some elements of the apparatus are shown according to a first example embodiment;
Fig. 2a shows another schematic picture of a surveillance apparatus, wherein some elements of the apparatus are shown;
Fig. 2b shows another schematic picture of a surveillance apparatus from another angle, wherein some elements of the apparatus are shown;
Fig. 3a shows another schematic picture of a surveillance apparatus, wherein some elements of the apparatus are shown;
Fig. 3b shows another schematic picture of a surveillance apparatus from another angle, wherein some elements of the apparatus are shown;
Fig. 4a shows another schematic picture of a surveillance apparatus, wherein some elements of the apparatus are shown;
Fig. 4b shows another schematic picture of a surveillance apparatus from another angle, wherein some elements of the apparatus are shown;
Fig. 5a shows a schematic picture of a surveillance apparatus according to an example embodiment useful for understanding the claimed invention but which does not fall into the scope of the claims;
Fig. 5b shows a schematic picture of a vision system;
   ;
Fig. 6 presents an example block diagram of a control apparatus in which various embodiments of the invention may be applied;
Fig. 7 shows a schematic picture of a wide field of view model (WFOV) and related data; and
Fig. 8 shows a schematic picture of a system.

### DETAILED DESCRIPTION OF THE DRAWINGS

In the following description, like numbers denote like elements.

A military vehicle camera system needs to contend with harsh environmental conditions, such as gunfire shock, muzzle flash, vibration, high- and low- temperatures, solar load, water, sand, dust and mud. Different and fast changing light conditions while the vehicle is moving from dark shadow areas to bright sunlight requires an imaging sensor, which can quickly adapt and integrate. When firing the howitzer or machine gun, a strong muzzle flash can cause image blur when using common standard dynamic range CMOS or CCD imaging sensors. During fast climate change from cold to hot, fogging inside the camera housing could limit the camera view.

Climate and visibility conditions define further challenges, and weather conditions vary. There can be early morning rain or snow, desert sunlight with dust, sunset conditions, and extremely poor visibility.

No single sensor technology can cover all these operational conditions. Only a combination of two or more different image sensor technologies, such as Long Wavelength Infra-Red (LWIR), and Complementary Metal-Oxide-Semiconductor (optical sensor) CMOS or Charge Coupled Device (optical sensor) CCD sensors may provide an image under all such different conditions.

Horizontal field of view & detection recognition range define their own challenges. These parameters may actually be in contradiction. The larger the horizontal field of view for a single sensor camera system, the lower the Detection Recognition Identification (DRI) range may be. A single camera and lens optic with a wide horizontal field of view (HFOV) may have the disadvantage of optical distortion and a fisheye effect, which leads to poor depth perception. When combining two of the same cameras with lenses, and using an image stitching algorithm, the DRI range may be significantly better with a larger HFOV. A stitching algorithm, however, causes no dead zones on the vehicle, compared to different single camera installations.

Safety and reliability are key factors. The digital camera system needs to be available under any conditions, since freezing camera images could cause a crash or threaten the vehicle's operation. Thus, a modular software with different threats for each process is required. Each process needs to be monitored with a software watchdog. Additionally, a built-in hardware test is required in order to display system failure immediately.

System latency plays an important role on the system performance. The overall system latency should be as low as possible from glass to glass, as different studies have shown that a latency of more than 100 milliseconds causes the vehicle crew to suffer "motion sickness" while viewing the camera system monitor.

Human stress factor in combat situations are important too. During operations and combat situations the stress factor of the crew is high. Thus, the HMI of the vision system, including the software menu, needs to be simple and operating failure proof. Input keys needs to be illuminated, ergonomically arranged, and in compliance with relevant standards.

Resolution of the sensors and display panel have their own effects. As the imaging sensor resolution increases, the pixel size decreases, as does the low light sensitivity. For a low light sensitive camera system, a sensor pixel size of between 5 nm and 10 nm at 1280 x 768 up to 1920 x 1080 sensor resolution is the combination of one example embodiment. The display panel resolution and display ratio should be the same as, or very similar to, the imaging sensor resolution and sensor ratio, otherwise the monitor display may become a limiting factor for the vision system.

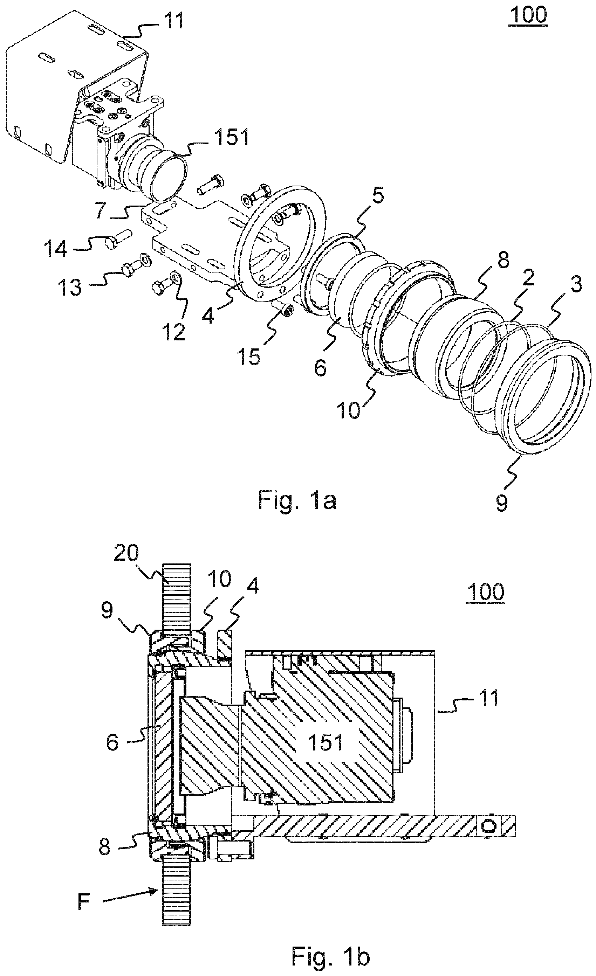

Fig. 1a shows a schematic picture of a surveillance apparatus 100, wherein some elements of the apparatus 100 are shown.

The camera apparatus 100 comprises a first O-ring 2, a second O-ring 3, a mounting ring 4, a clamping ring 5, a protective window 6, a mounting plate 7, a spherical ring element 8, an outer ring element 9, an inner ring element 10, a blankholder 11, a ring washer 12, a first hex bolt 13, a second hex bolt 14, and a cylinder head bolt 15. Some of the elements may be optional.

Fig. 1b shows a schematic picture of a surveillance apparatus 100 from another angle, wherein some elements of the apparatus are shown.

In an embodiment, a surveillance apparatus 100 comprises a housing 20 with a front surface F, wherein a camera device 151 is arranged to operate through an opening of the front surface F, The apparatus 100 further comprises a spherical ring element 8 comprising a protective window 6. Furthermore, the apparatus 100 comprises an inner ring element 10 arranged at an inner side of the housing 20 and an outer ring element 9 arranged at an outer side of the housing 20, The spherical ring element 8 is arranged between the inner ring element 10 and the outer ring element 9, and the inner 10 and outer ring element 9 are configured to allow pivotal movement of the spherical ring element 8.

The outer ring element 9 comprises a circular groove (not shown in Fig. 1b) arranged on inner circumference of the outer ring element 9 and a plurality of nozzles (not shown) operationally connected to the circular groove. Furthermore, an outlet (not shown) is arranged on the front surface F of the housing 20 to guide a fluid to the circular groove of the outer ring element 9.

The inner ring element 10 and the outer ring element 9 are on opposite sides of the housing 20 wall.

In an embodiment, the fluid to be guided to the groove comprises air or liquid.

In an embodiment, the nozzles are directed circumferentially towards an outer surface of the protective window 6.

In an embodiment, in response to a control signal the fluid is changed between the air and the liquid.

In an embodiment, a plurality of camera devices are arranged and configured to provide combined image data on at least one channel, wherein the channel is associated with at least two camera devices with substantially same field-of-view (FOV) angles but different line-of-sight (LOS) angles, and a wide field of view image data is configured to be generated using the combined image data.

In an embodiment, the first channel is a longwave infrared (LWIR) channel and the second channel is a visible spectrum (VIS) channel.

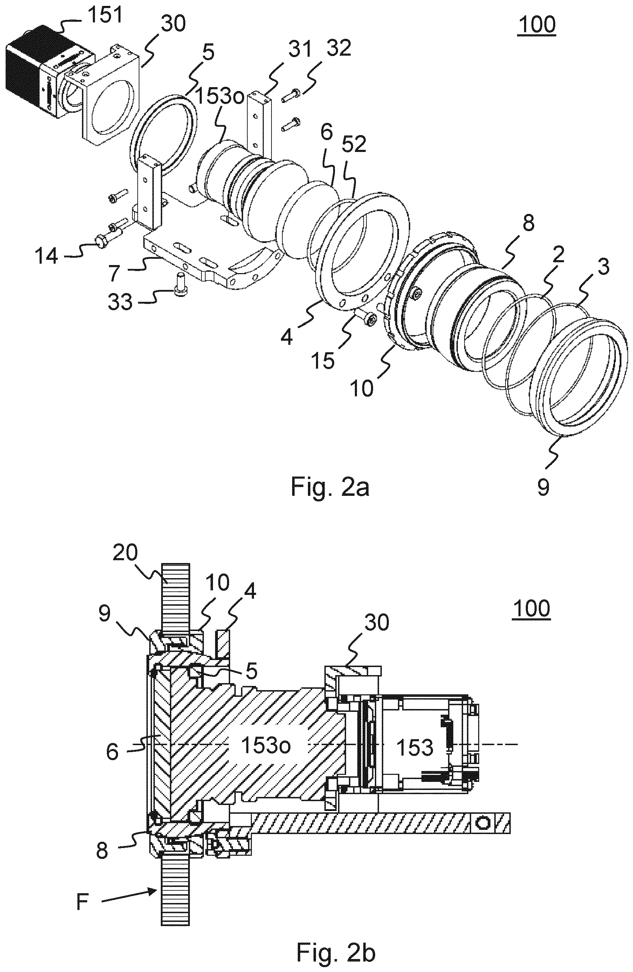

In an embodiment, Figs. 1a-1b may relate to a camera device of the first channel and Figs. 2a-2b may relate to a camera device of the second channel.

Fig. 2a shows a schematic picture of a surveillance apparatus 100, wherein some elements of the apparatus 100 are shown.

The camera apparatus 100 comprises a first O-ring 2, a second O-ring 3, a third O-ring 52, a mounting ring 4, a clamping ring 5, a mounting plate 7, a spherical ring element 8, an outer ring element 9, an inner ring element 10, a first holder 30, a second hex bolt 14, a cylinder head bolt 15, a second holder 31, a second cylinder head bolt 32, a third cylinder head bolt 33, an objective 153o (such as a VIS objective for example), and a further O-ring. The objective 153o may comprise a protective window 6 at outer end of the objective 153o. The protective window 6 may also be arranged as a separate element without connection to the objective 153o. Some of the elements may be optional.

In an embodiment, the protective window 6 may be made of Sapphire or Zinc Sulfide (ZnS), for example. Furthermore, the outer surface of the protective window may be coated with a layer of a coating material. Also the inner surface may be coated with a layer of a coating material. Coating material used for outer surface may comprise material for scratch resistance and anti-reflection, for example. Material for inner surface may comprise material for anti-reflection, for example.

In an embodiment, for VIS channel as in Figs, 2a-b, the protective window 6 may have, for example, following characteristics: 55mm x 5.0 mm Sapphire window; Material Optical grade C-plane Sapphire; Parallelism < 10 arc seconds; Transmitted Wavefront Error 1/4 wave @ 632.8nm; Surface quality 20-10 Scratch-Dig MIL-PRF-13830B; Clear aperture 90% centered; AR Coated 400-1000nm with Sapphire overlay
In an embodiment, the clamping ring 5 fixes the protective window 6 within the spherical ring element 8 when in installed position as in Fig. 2b. The clamping ring 5 may connect directly with the protective window 6 or the clamping ring 5 may connect with the sleeve of the objective 153o on one side and the objective 153 connects with the protective window 6 on other side and thus fix the window within the spherical ring element.

Alternatively, even the protective window 6 may be optional if the external surface of the objective 153o is coated with scratch resistant material.

Present arrangement has several advantages. For example, accurate adjustment of the line of sight as well as field of view in 3D is eased. Secondly, the camera objective 153o is always parallel with the protective window 6 that minimizes reflections.

Fig. 2b shows a schematic picture of a surveillance apparatus 100 from another angle, wherein some elements of the apparatus are shown.

In an embodiment, a surveillance apparatus 100 comprises a housing 20 with a front surface F, wherein a camera device 153, 153o is arranged to operate through an opening of the front surface F, The apparatus 110 further comprises a spherical ring element 8 comprising a protective window 6. A clamping ring 5 may be configured to fix the protective window 6 in place within the spherical ring element 8. The clamping ring 5 may also be configured to fix the objective 153o in place (together with the protective window 6) within the spherical ring element 8. Furthermore, the apparatus 100 comprises an inner ring element 10 arranged at an inner side of the housing 20 and an outer ring element 9 arranged at an outer side of the housing 20, The spherical ring element 8 is arranged between the inner ring element 10 and the outer ring element 9, and the inner 10 and outer ring element 9 are configured to allow pivotal movement of the spherical ring element 8.

The outer ring element 9 comprises a circular groove (not shown in Fig. 2b) arranged on inner circumference of the outer ring element 9 and a plurality of nozzles (not shown) operationally connected to the circular groove. Furthermore, an outlet (not shown) is arranged on the front surface F of the housing 20 to guide a fluid to the circular groove of the outer ring element 9.

The camera device 153, 153o may be an integrated device comprising both elements or they can be provided as separate elements as the objective part 153o and the camera part 153, for example.

The inner ring element 10 and the outer ring element 9 are on opposite sides of the housing 20 wall.

In an embodiment, the fluid to be guided to the groove is air or liquid.

In an embodiment, the nozzles are directed circumferentially towards an outer surface of the protective window 6.

In an embodiment, in response to a control signal the fluid is changed between the air and the liquid.

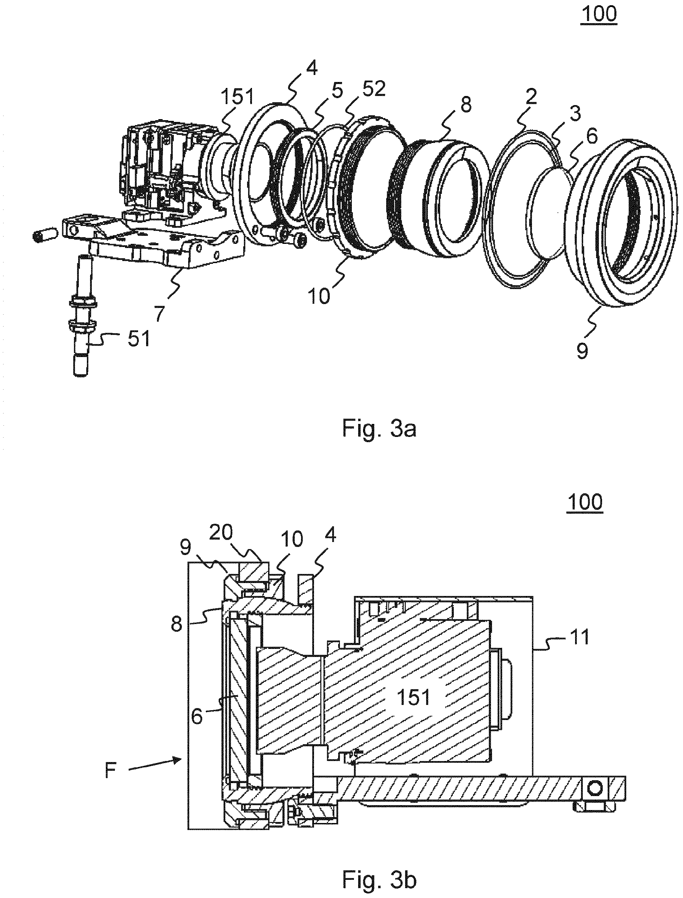

Fig. 3a shows another schematic picture of a surveillance apparatus 100, wherein some elements of the apparatus 100 are shown.

The camera apparatus 100 comprises a first O-ring 2, a second O-ring 3, a third O-ring 52, a fourth O-ring 53, a mounting ring 4, a clamping ring 5, a protective window 6, a mounting plate 7, a mounting support 51 that may comprise a threaded rod to be used for height adjustment and attachment, a spherical ring element 8, an outer ring element 9, an inner ring element 10. Some of the elements may be optional and not all bolts and wash rings are shown to simplify the figure.

In an embodiment, for LWIR channel as in Figs, 3a-b, the protective window 6 may comprise material of a Zinc Sulfide (ZnS) with polishing and coating.

Fig. 3b shows a schematic picture of a surveillance apparatus 100 from another angle, wherein some elements of the apparatus are shown.

In an embodiment, a surveillance apparatus 100 comprises a housing 20 with a front surface F, wherein a camera device 151 is arranged to operate through an opening of the front surface F, The apparatus 100 further comprises a spherical ring element 8 comprising a protective window 6. Furthermore, the apparatus 100 comprises an inner ring element 10 arranged at an inner side of the housing 20 and an outer ring element 9 arranged at an outer side of the housing 20, The spherical ring element 8 is arranged between the inner ring element 10 and the outer ring element 9, and the inner 10 and outer ring element 9 are configured to allow pivotal movement of the spherical ring element 8.

The outer ring element 9 comprises a circular groove (not shown in Fig. 3b) arranged on inner circumference of the outer ring element 9 and a plurality of nozzles (not shown) operationally connected to the circular groove. Furthermore, an outlet (not shown) is arranged on the front surface F of the housing 20 to guide a fluid to the circular groove of the outer ring element 9. The inner ring element 10 and the outer ring element 9 are on opposite sides of the housing 20 wall.

In an embodiment, the fluid to be guided to the groove may be air or liquid.

In an embodiment, the nozzles are directed circumferentially towards an outer surface of the protective window 6.

In an embodiment, in response to a control signal the fluid is changed between the air and the liquid.

In an embodiment, a plurality of camera devices are arranged and configured to provide combined image data on at least one channel, wherein the channel is associated with at least two camera devices with substantially same field-of-view (FOV) angles but different line-of-sight (LOS) angles, and a wide field of view image data is configured to be generated using the combined image data.

In an embodiment, the first channel is a longwave infrared (LWIR) channel and the second channel is a visible spectrum (VIS) channel.

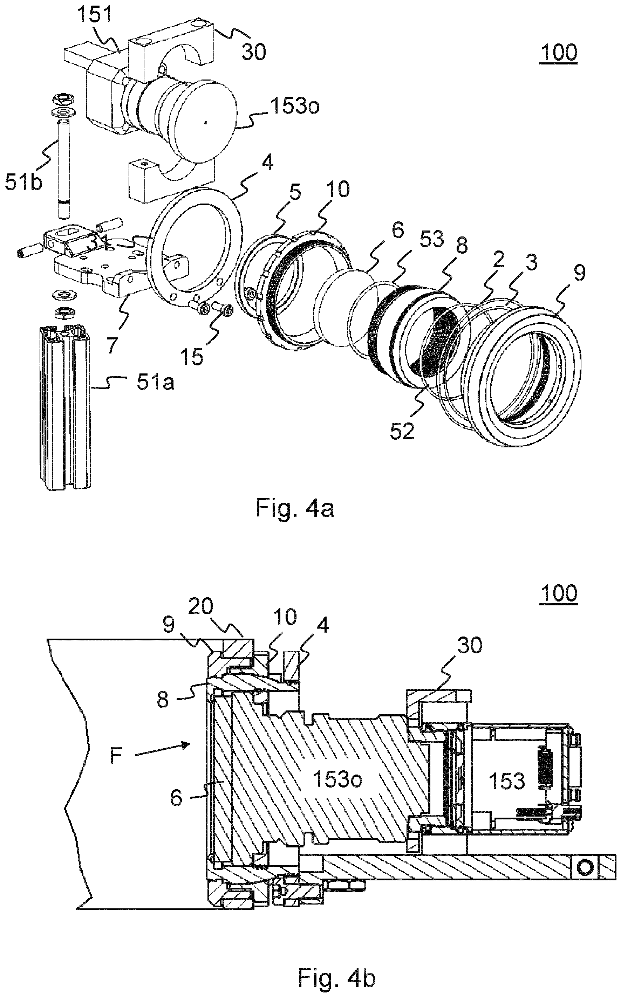

In an embodiment, Figs. 3a-3b may relate to a camera device of the first channel and Figs. 4a-4b may relate to a camera device of the second channel.

Fig. 4a shows a schematic picture of a surveillance apparatus 100, wherein some elements of the apparatus 100 are shown.

The camera apparatus 100 comprises a first O-ring 2, a second O-ring 3, a mounting ring 4, a clamping ring 5, a mounting plate 7, a mounting support 51a-b, a spherical ring element 8, an outer ring element 9, an inner ring element 10, a first holder 30, a cylinder head bolt 15, a second holder 31, an objective 153o (such as a VIS objective for example), and an O-ring 52. The objective 153o may comprise a protective window 6 at outer end of the objective 153o or arranged separately. Some of the elements may be optional.

Fig. 4b shows a schematic picture of a surveillance apparatus 100 from another angle, wherein some elements of the apparatus are shown.

In an embodiment, a surveillance apparatus 100 comprises a housing 20 with a front surface F, wherein a camera device 153, 153o is arranged to operate through an opening of the front surface F, The apparatus 100 further comprises a spherical ring element 8 comprising a protective window 6. Furthermore, the apparatus 100 comprises an inner ring element 10 arranged at an inner side of the housing 20 and an outer ring element 9 arranged at an outer side of the housing 20, The spherical ring element 8 is arranged between the inner ring element 10 and the outer ring element 9, and the inner 10 and outer ring element 9 are configured to allow pivotal movement of the spherical ring element 8.

The outer ring element 9 comprises a circular groove (not shown in Fig. 4b) arranged on inner circumference of the outer ring element 9 and a plurality of nozzles (not shown) operationally connected to the circular groove. Furthermore, an outlet (not shown) is arranged on the front surface F of the housing 20 to guide a fluid to the circular groove of the outer ring element 9.

The camera device 153, 153o may be an integrated device comprising both elements or they can be provided as separate elements as the objective part 153o and the camera part 153, for example. The inner ring element 10 and the outer ring element 9 are on opposite sides of the housing 20 wall.

In an embodiment, the fluid to be guided to the groove comprises air or liquid. The nozzles may be directed circumferentially towards an outer surface of the protective window 6.

In an embodiment, in response to a control signal the fluid is changed between the air and the liquid.

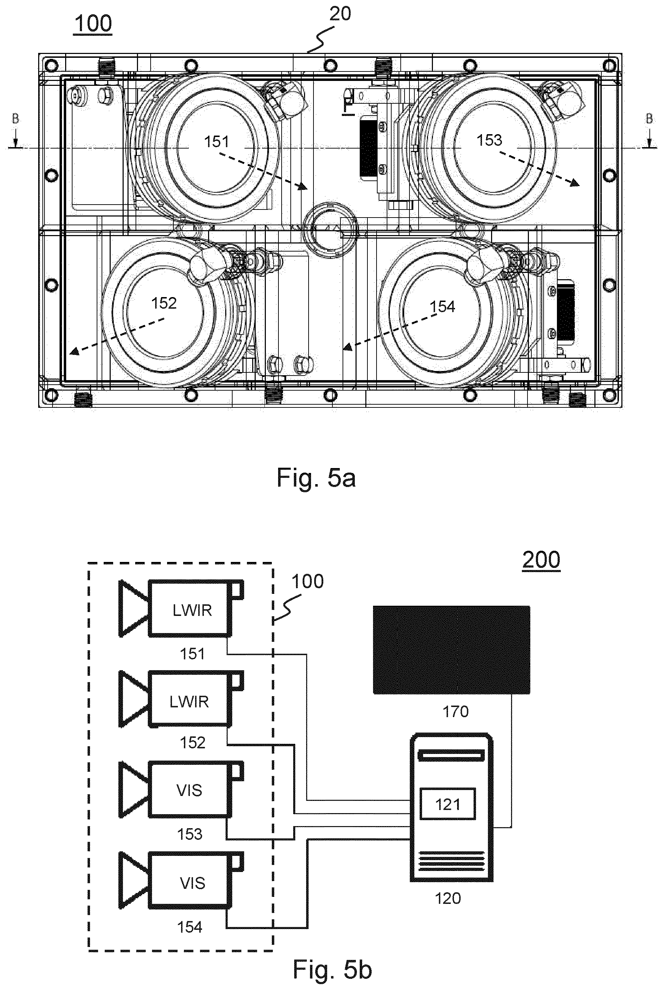

Fig. 5a shows a schematic picture of a surveillance apparatus 100.

Fig. 5b shows a schematic picture of a vision system 200. The vision system 200 may also be understood as a surveillance apparatus 100 combined with a control apparatus 120 and a display 170.

A vehicle system may comprises a control apparatus 120 configured to provide and operate a wide field of view model (WFOV) 121. The control apparatus 120 may also be called as a surveillance apparatus when combined with the cameras 151-154 and a display 170.

The surveillance apparatus 100 comprises a 120° camera housing 20 that may comprise a plurality of cameras 151-154 (e.g. four).

In an embodiment, the vision system 200 comprises image acquisition, and processing software (wide field of view model (WFOV) 121.

Alternatively, the apparatus 100 has 2 x identical camera pairs 151-152, 153-154 and associated lenses. Additional cameras with camera link interfaces can be easily integrated without changing the software 121.

Preferably, all components 20, 120, 151-154, 170 are selected to fulfil shock and vibration requirements according to MIL-STD-810G tracked vehicle vibrations. The electronics and sensors are housed in a modular body, which is protection class IP68K.

The camera housing 20 is all weather housing. The camera windows can be cleaned with water and air when sand & dust or mud are limiting the view. The operator can activate the cleaning via monitor keyboard if required. The 120° camera housing 20 is designed to withstand a sand storm acc. MIL-STD-81 0F, Method 510.4. The housing material and surface treatment comply with salt and fog requirements of MIL-STD-810F, Method 509.4. The 120° camera system provides high performance, low latency, with easy and intuitive operation.

In an embodiment, the housing 20 comprises a front surface F, wherein the plurality of camera devices 151-154 are arranged.

In an embodiment, a plurality of camera devices 151-154 are configured to provide image data on different channels, wherein each channel is associated with at least two camera devices with substantially same field-of-view (FOV) angle but different line-of-sight (LOS) angle.

The camera devices 151-152 may be configured to operate on a first channel that is a longwave infrared (LWIR) channel. The camera devices 153-154 may be configured to operate on a second channel that is a visible (VIS) channel.

In an embodiment, the at least two camera devices 151-152 associated to the first channel are arranged vertically alongside each other. Correspondingly, the at least two camera devices 153-154 associated to the second channel are arranged vertically alongside each other.

Furthermore, the at least two camera devices 151-152 associated to the first channel are arranged horizontally alongside the at least two camera devices 153-154 associated to the second channel.

Various system features support the chief of section for clearing the vehicle surrounding during day and night. Software features like digital zoom, special image contrast enhancement algorithm which display image details under difficult environmental conditions.

Preferably, different operating modes are determined. In split screen mode LWIR and CMOS images are displayed simultaneously. In fusion mode, both sensor images LWIR and CMOS are fused into one full screen image.

A recording function may be integrated with several days of recording capability, embedded video date & time stamp. This function can be used for mission analysis and training purposes.

In an embodiment, the camera device 151-154 comprises at least one of the following: IR sensor, SWIR sensor, CMOS sensor, and CCD sensor. The at least two camera devices 151-152 associated to the first channel may comprise IR camera devices with resolution of 640 x 480, for example. The at least two camera devices 153-154 associated to the second channel may comprise CMOS camera devices with resolution of 1920 x 1080 for example.

In an embodiment, the housing 20 is rotatably and/or tiltably arranged to a vehicle. The rotation and/or tilting of the housing 20 may be controlled by the control apparatus or its operator.

In an embodiment, a field-of-view (FOV) angle of each camera 151-154 is 60°. Thus, image data for the first channel extends over the field-of-view (FOV) angle of 120° when the camera devices 151-152 are arranged as in Fig. 5a where the angular difference of line of sight (LOS) between camera devices 151-152 is 30°. Correspondingly, image data for the second channel extends over the field-of-view (FOV) angle of 120° when the camera devices 153-154 are arranged as in Fig. 5a where the angular difference of line of sight (LOS) between camera devices 153-154 is 30°. By doing that, it is possible to provide field-of-view (FOV) angle of the output data to be 120°.

The wide field of view model (WFOV) 121 of the control apparatus 120 may operate as follows. The control apparatus 120 receives first image data from a first camera device 151 and second image data from a second camera device 152 of a first channel (LWIR). The control apparatus 120 also receives third image data from a third camera device 153 and fourth image data from a fourth camera device 154 of a second channel (VIS). Then, the wide field of view model 121 is generated based on the first, second, third and fourth image data. The wide field of view model 121 is configured to utilize a stitching mode, wherein image data of at least one channel is configured to be combined using a stitching algorithm, a first operating mode, wherein image data of one channel is configured to be processed, a second operating mode, wherein image data of both channels are configured to be combined, and an output mode, wherein the output mode defines configuration for image data to be provided on the display. Once selection information for the modes is received, output data is generated for the display 170 based on the selection information and the wide field of view model 121. Selection information may be received from operator or determined automatically by the model 121.

In an embodiment, the images from the LWIR cameras 151-152 are stitched in the software model 121, which results in an image covering a 120° horizontal field of view and a high total resolution of 1280 x 960 pixels for the LWIR image, and 3840 x 2160 pixels for the VIS (visible) CMOS image.

The use of two camera pairs 151-152, 153-154 with 60° HFOV optical lens results in a higher Detection Recognition Identification (DRI) range than with a single camera having a wide HFOV lens and enables a 120° horizontal field of view. A single camera and an optical lens with a wide HFOV has the disadvantages of optical distortion and the fisheye effect among others.

The vision system 200 overcomes this by stitching two camera images to provide the highest DRI range in its class.

The stitched LWIR and VIS-CMOS images can be displayed in split screen mode simultaneously in first mode, full screen mode LWIR, or CMOS in second mode, and image fusion mode in third mode.

The software of the wide field of view model (WFOV) 121 may be divided into several modules. Each module is responsible for a defined set of functionalities. Multiple processes are used to group and execute a subset of modules, while each process can execute several threads.

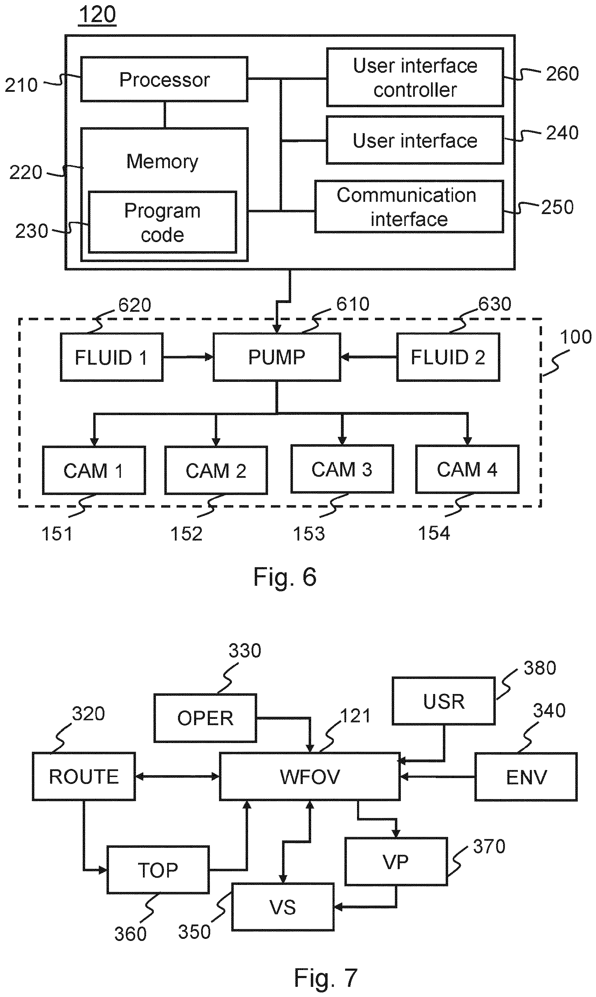

Communication between the processes is established by message based IPC protocols and shared memory 220 (see Fig. 6). Communication between the modules 151-154, 120-121, 170 inside the same process is implemented using shared memory 220.

The reason for grouping modules 151-154, 120-121, 170 into a single process is to decrease the latency of communication between the modules. Using a message based IPC protocol for communication between the processes allows separating functionality, which keeps the parts simple and avoids complexity.

Transmission of image data between the camera control processes and the main process is carried out using shared memory to reduce the overall latency.

For logging and watchdog functionality, systemd may be used. Each process has to regularly notify the system process, otherwise it will be restarted. All process actions are logged into the system's database.

A wide dynamic range CMOS camera sensor may be integrated within camera devices 153-154, for example, for the 120° camera system. The camera sensor signal response is logarithmic through more than 7 decades (>140 dB). The logarithmic sensor provides an almost infinite dynamic range, which results in no saturation, a see through halo, and no loss of details.

When driving on bumpy roads the horizon line changes. With a traditional camera sensor, when shifting from a dominant bright sky to a dominant dark background, linear sensors either lose information at the ground or saturate in the sky. With a logarithmic sensor and the wide field of view model (WFOV) 121, all information is always captured.

In order to increase the low light sensitivity to night level 5, an image intensifier tube can be combined with the wide dynamic range CMOS camera sensor. This WDR CMOS image intensified camera may be integrated also into the driver sight periscope and may be supported by the developed image processing software.

Fig. 6 presents an example block diagram of a control apparatus 120 in which various embodiments of the invention may be applied. The control apparatus 120 is configured to maintain and/or operate the wide field of view model (WFOV) and control cleaning of the camera lenses.

The general structure of the control apparatus 120 comprises a user interface 240, a communication interface 250, a processor 210, and a memory 220 coupled to the processor 210. The control apparatus 120 further comprises software 230 stored in the memory 220 and operable to be loaded into and executed in the processor 210. The software 230 may comprise one or more software modules and can be in the form of a computer program product, such as the wide field of view model (WFOV) 121 of Fig. 1. The control apparatus 120 may further comprise a user interface controller 260. The user interface 240 may comprise e.g. the display 170 of Fig. 1, 2b.

The processor 210 may be, e.g., a central processing unit (CPU), a microprocessor, a digital signal processor (DSP), a graphics processing unit, or the like. Fig. 2c shows one processor 210, but the apparatus 120 may comprise a plurality of processors.

The memory 220 may be for example a non-volatile or a volatile memory, such as a read-only memory (ROM), a programmable read-only memory (PROM), erasable programmable read-only memory (EPROM), a random-access memory (RAM), a flash memory, a data disk, an optical storage, a magnetic storage, a smart card, or the like. The apparatus 120 may comprise a plurality of memories. The memory 220 may be constructed as a part of the apparatus 120 or it may be inserted into a slot, port, or the like of the apparatus 120 by a user. The memory 220 may serve the sole purpose of storing data, or it may be constructed as a part of an apparatus serving other purposes, such as processing data. A proprietary application, such as computer program code for the wide field of view model (WFOV), route related data, vehicle related data, gun data, sensor data or environmental data may be stored to the memory 220.

The user interface controller 260 or the user interface 240 may comprise circuitry for receiving input from a user of the control apparatus 120 (an operator), e.g., via a keyboard, graphical user interface shown on the display of the user interfaces 240 of the control apparatus 120, speech recognition circuitry, or an accessory device, such as a headset, and for providing output to the user via, e.g., a graphical user interface or a loudspeaker.

The communication interface module 250 implements at least part of data transmission. The communication interface module 250 may comprise, e.g., a wireless or a wired interface module. The wireless interface may comprise such as a WLAN, Bluetooth, infrared (IR), radio frequency identification (RF ID), GSM/GPRS, CDMA, WCDMA, LTE (Long Term Evolution) or 5G radio module. The wired interface may comprise such as RS-232, SPI, I2C, Ethernet, universal serial bus (USB) or any other standard for example. The communication interface module 250 may be integrated into the control apparatus 120, or into an adapter, card or the like that may be inserted into a suitable slot or port of the control apparatus 120. The communication interface module 250 may support one radio interface technology or a plurality of technologies. The control apparatus 120 may comprise a plurality of communication interface modules 250.

In an embodiment, the control apparatus 120 is configured to connect with the camera devices 151-154 via the communication interface 250.

In an embodiment, the control apparatus 120 is configured to control a pump device 610 to trigger fluid being pressurized to at least one of the camera devices 151-154 of the apparatus 100 (see Figs. 1-5b).

At least one of the camera devices 151-154 is arranged in a camera apparatus 100 with an outer ring element comprising a circular groove arranged on inner circumference of the outer ring element and a plurality of nozzles operationally connected to the circular groove, and an outlet arranged on the front surface of the housing to guide a fluid to the circular groove of the outer ring element. The pressurized fluid is provided from at least one of the fluid reservoirs 620, 630 through the pump 610 to the nozzles in the groove (see Figs. 1-4).

The fluid comprises air 620 or liquid 630. The fluid 620, 630 may be pressurized without the need of a pump 610. In such case, the pump 610 may operate as switching valve controlled by the control apparatus 120. Otherwise the pump 610 may be used to pressurize a fluid provided by the reservoir 620, 630 to the nozzles based on the control.

The control apparatus 120 is configured to control guidance of fluid to the circular groove of the outer ring element of the camera apparatus 100. The control apparatus determines at least one control sequence; and control guidance of the fluid to the circular groove of the outer ring element based on the at least one control sequence.

In an embodiment, at least one control sequence is configured to control at least one of a liquid fluid or an air fluid. The liquid fluid is configured to be used for cleaning and the air fluid is configured to be used for cleaning or drying.

The control apparatus determines at least one control sequence, wherein air fluid is activated for a pre-defined time period.

The control apparatus determines alternatively at least one control sequence, wherein air fluid is activated for an undefined time period and to be disabled in response to another control sequence.

The control apparatus determines alternatively at least one control sequence, wherein air fluid is activated based on route information so that air fluid is activated when entering dusty environment.

Alternatively, the control apparatus is configured to detect current environmental status and/or future environmental status based on external sensor system or forecasted route information. Based on the current and/or future environmental status the control apparatus 120 may dynamically control cleaning function using the elements 610-630 for the camera devices 151-154 to ensure optimal visibility in dynamic circumstances.

For example, if control apparatus 120 is configured to detect based on route information that a vehicle is about to approach a dusty environment, a control for pressurized air may be activated to keep the camera devices' visibility good.

Correspondingly, if the control apparatus 120 is configured to detect that a moving vehicle is about to approach a muddy environment, a control for pressurized water may be activated to keep the camera devices' visibility good.

A skilled person appreciates that in addition to the elements shown in Fig. 6, the control apparatus 120 may comprise other elements, such as microphones, extra displays, as well as additional circuitry such as input/output (I/O) circuitry, memory chips, application-specific integrated circuits (ASIC), processing circuitry for specific purposes such as source coding/decoding circuitry, channel coding/decoding circuitry, ciphering/deciphering circuitry, and the like. Additionally, the control apparatus 120 may comprise a disposable or rechargeable battery (not shown) for powering when external power if external power supply is not available.

In an embodiment, the control apparatus 120 comprises speech recognition means. Using these means, a pre-defined phrase may be recognized from the speech and translated into control information for the apparatus 120, for example.

External devices or sub-systems (e.g. elements 151-154, 610-630 or 170 of Fig. 5b) may be connected to the control apparatus 120 using communication interface 250 of the apparatus 120 or using a direct connection to the internal bus of the apparatus 120.

Fig. 7 shows a schematic picture of a wide field of view model (WFOV) 121 and related information flows.

Elements 320-380 may have alternative ways to connect with each other and Fig. 7 only shows one example embodiment. Furthermore, only connections that relate somehow to the WFOV 121 are illustrated. For example, environmental information 340 may be also used for route planning but direct connection between blocks 320 and 340 is not shown for simplifying the Fig. 7.

The WFOV 121 can be configured to operate as a stand-alone solution or as an integrated part of the control/management system of the vehicle. The WFOV 121 may enable automation of vision system 350 control, and further enables a higher degree of autonomous operation on board conventional vehicles and paves the way for vision and route management for autonomous vehicles.

Vision system information 350 provided to the direction of the wide field of view model (WFOV) 121 comprises at least image data of different channels and camera devices.

The wide field of view model (WFOV) 121 may be interfaced with the camera system, navigation system, automation system, power management system and sub-systems like gun solutions, for example.

The wide field of view model (WFOV) 121 may be arranged to receive route plan information 320 including information like weather forecasts, navigation information for the dedicated route, waypoint information for the dedicated route, environmental restrictions and other relevant information. The route plan information 320 may be received from the navigation system or the route plan information 320 may be generated by the control apparatus 120. The route plan information 320 may comprise at least one of the following: navigation information; and environmental information. The navigation information may comprise at least one of the following: destination information of the dedicated route; remaining travel time of the dedicated route; remaining distance of the dedicated route; navigation information for the dedicated route; waypoint information for the dedicated route; and environmental restriction information of the dedicated route.

Topography information 360 associated to the dedicated route may be determined using the route plan information 320. The topography information 360 may comprise information on topographical details of the route or nearby area, as well as details of soil, for example. Furthermore, it may comprise information on possible obstacles or other objects around the vehicle that may affect either to movements, cover or visibility of the vision system 350 including cameras.

The wide field of view model (WFOV) 121 may be configured to automate interaction between navigational route planning and setting up different vision system 350 modes or camera parameters.

The wide field of view model (WFOV) 121 may be configured to automate interaction between navigational route planning and controlling cleaning system of different camera devices using at least one type of fluid. The fluid may be provided through nozzles arranged to camera mechanics as disclosed in Figs. 1a-4a and Figs. 1b-4b.

In an embodiment, the control apparatus 120 may be configured to determine a control task relating to the route plan information 320 automatically based on the wide field of view model (WFOV) 121. Thus, the route plan information 320 that is determined for a dedicated route, may be dynamically adjusted automatically using the wide field of view model (WFOV) 121.

The control apparatus 120 may be configured to dynamically adjust navigation information of the route plan information. Furthermore, the control apparatus 120 may be configured to dynamically adjust navigation information for the dedicated route, and, for example, dynamically adjusting waypoint information for the dedicated route. For example, the route with optimal visibility and/or cover may be determined.

The control apparatus 120 may be configured to dynamically adjust destination information or remaining travel time of the dedicated route.

The wide field of view model (WFOV) 121 is further arranged to receive characteristic information 330 representing at least one operating characteristic of the vehicle. The operating characteristic information 330 of the vehicle may comprise at least one of the following: currently active gun system and ammunition; status of search light system; and status information of energy storage sub-system, such as a battery system.

The wide field of view model (WFOV) 121 may further be arranged to receive environmental information 340 separate or in addition to possible environmental information included in the route plan information 320. The environmental information 340 may represent at least one current environmental characteristic of the vehicle, such as soil characteristic information, weather information; wind information; air pressure information; ice information; and roll or pitch information of the vehicle.

If there has not been identified any violations of possible constraints, the wide field of view model (WFOV) 121 may generate at least one task for controlling vision system 350 (or 200 in Fig. 5b) with or without some associated search light within the vehicle automatically based on the wide field of view model (WFOV) 121 and control the associated element based on the determined task.

For example, the route planning system may carry out following procedures: A) Calculate and balance to what degree a route deviation will benefit the overall vision system. B) Generate an operational plan for when to change between different vision system operation modes during the planned route and/or when to activate cleaning function and with which fluid. C) If the preferred target time is known, calculate the optimal speed profile including staying longer in optimal areas for vision system and avoiding waiting time in low quality vision areas. Additionally, the system may collect real operating data, compare it with the original prediction/recommendation, and automatically improve the recommendation for later routes operated by the wide field of view model (WFOV) 121.

If there has not been identified any violations of possible constraints, the wide field of view model (WFOV) 121 may generate vision plan (VP) 370 and utilize the vision plan (VP) 370 for determining control tasks relating to cleaning system 610-630 (see Fig. 6), vision system 350 or route plan 320 within the vehicle automatically based on the wide field of view model (WFOV) 121. The vision plan may comprise, for example, settings when different operating modes (split, single, fusion) is activated, rotation/tilting angle for the camera housing, activation of search light or laser light, cleaning camera lenses, and detailed camera device settings or image data processing parameters.

While cruising and performing transit during the route, the wide field of view model (WFOV) 121 may maintain a dynamic and up-to-date situational awareness in relation to the executed route (navigation) and vision plan and the status from all camera devices and sensors, for example. If the situation changes and a system changes health status, the wide field of view model (WFOV) 121 may be configured to update the vision plan 370 including tasks and automatically notifying the navigation system to allow the navigation system to modify the route plan information accordingly.

Because the wide field of view model (WFOV) 121 has access to information about optimal operation conditions of the sub-systems, the model can help to determine optimal operating mode, wherein only confirmed request from the operator is needed, and the wide field of view model (WFOV) 121 may allow running sub-systems outside the optimal operation conditions.

The vision plan 370 information can be provided in a first mode as a schedule made available to the crew to follow. The crew may perform the scheduled tasks for the vision system 350 based on the vision plan 370. In a second mode, the vision plan 370 may be embedded in the main display of the vehicle, for example. The system may be further configured to provide an integrated guidance tool to prompt the operator when a task should take place and by acknowledgement from the operator enable and perform the task and end the task when performed. A third mode allows a fully automated solution, where the operator may only be informed about the vision plan 370 or the tasks determined by the wide field of view model (WFOV) 121. Optionally, current status of the model and next steps may be informed to the operator but the wide field of view model (WFOV) 121 is configured to control elements automatically. In such embodiment the vision plan 370 may be optional.

It is possible to override the wide field of view model (WFOV) 121 by changing it to standby mode and allowing a manual operation of the visual system 350 and the sub-systems. At the third mode, the wide field of view model (WFOV) 121 can operate autonomously together with the vision system 350 and/or navigation system and all the sub-systems. Instead of notifying the operator, the wide field of view model (WFOV) 121 may log (e.g. using the vision plan 370) the activities and events and will only request assistance from the mission controller or a human operator in case the wide field of view model (WFOV) 121 is facing a situation it cannot handle or it is not available for operation.

The energy vision plan 370 may also comprise automatic information being sent to mission control room. The information being sent may relate to, for example, estimate of enemy equipment or persons detected, or supplies needed when at next service, for example. By doing that the mission control can make a better estimate of the overall situation. The mission control system may have a dynamic wide field of view model (WFOV) 121 of its own that receives inputs from multiple vehicles.

Alternatively, the wide field of view model (WFOV) 121 is configured to receive input from an operator (USR) 380 either on-board the vehicle or remote at other vehicle, for example. In certain pre-defined operating modes or tasks, it may be required that operator acknowledgement is received from the operator (USR) 380 for the determined task by the wide field of view model (WFOV) 121 before controlling an automation element of the vehicle based on the determined task in response to the received operator acknowledgement.

The wide field of view model (WFOV) 121 may be updated in real-time using the route plan information 320, the environmental information 340 and the operational characteristics 330. In an embodiment, when receiving confirmation from the operator 380 of the task being performed, the wide field of view model (WFOV) 121 is updated in response to the received confirmation.

In autonomous vehicle operation mode, automatic route planning may be executed to provide the route plan information 320 for a safe and optimized route taking into account planned destination and ETA, up to date chart data from the electronic chart library, predicted environmental conditions as well as status information of different sub-systems. Furthermore, a contingency plan to stop the vehicle safely in case of emergency is generated along the route for every leg or even leg segment, for example. The approval mechanisms of the route plan 320 may vary depending on autonomy level in use, authority rule sets and customer specifications. Once the route plan is activated and being executed, the control system is permanently monitoring and adapting the route execution with regards to track- and schedule keeping) if necessary. Reasons for adaptation can be, for example: new destination and/or new ETA, differences between predicted and real environmental conditions, collision avoidance maneuvers, and unexpected changes in the vehicle (i.e. unforeseen equipment failure).

The route plan information 320 comprises at least one of the following: navigation information for a waypoint or a destination; target time or arrival information for the waypoint or the destination; and environmental information associated to at least one route of the route plan information.

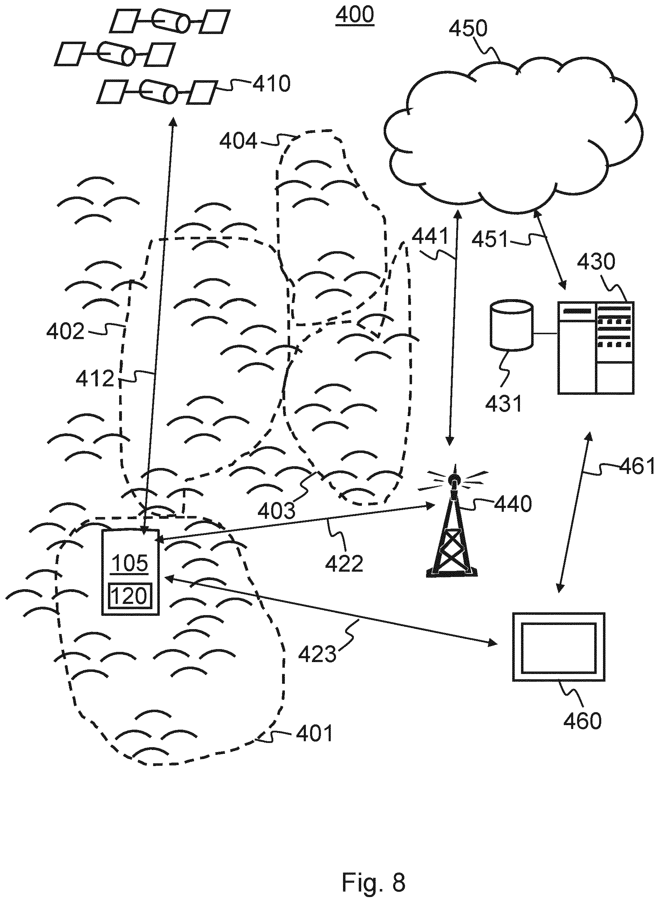

Fig. 8 shows a schematic picture of a system 400. A vehicle 105 comprises a control apparatus 120 for controlling vision system.

The control apparatus 120 is capable of downloading and locally executing software program code. The software program code may be a client application of a service whose possible server application is running on a server apparatus 430, 431 of the system 400. The control apparatus 120 may comprise a capturing device, such a sensor device, for providing vehicle related signals and data. The sensor device may comprise an accelerometer, an inclinometer, a gyroscope, a wind sensor, a positioning sensor, a temperature sensor, a pressure sensor, or a camera, for example. The camera may also be used to provide video data and a microphone may be used for providing audio data, for example. The sensor device may also provide environmental signals and data.

The control apparatus 120 is configured to generate surveillance image data, comprising: a plurality of camera devices configured to provide image data on different channels, wherein each channel is associated with at least two camera devices with substantially same field-of-view (FOV) angle but different line-of-sight (LOS) angle.

Environmental status changes around the vehicle on different areas when moving around. There may be obstacles, different lighting conditions, shades, raining, snowing, fog, dust etc. that may affect visibility around the vehicle.

Between waypoints, the vehicle 105 may choose different routes over the area and depending on the route there may be a plurality of areas or regions 401-404 with different conditions. The vehicle 105 route may be optimized using the wide field of view model (WFOV) 121 so that the vehicle 105 stays longer periods on areas 401-404 more optimal for visibility or cover, for example. Also the operation mode of the vision system may be automatically determined based on different areas 410-404 under control of the wide field of view model (WFOV) 121.

The control apparatus 120 may determine at least one control sequence and control guidance of the fluid (see e.g. Fig. 6) based on the at least one control sequence. The control sequence may be generated, for example, based on at least one of route information, environmental information, sensor data, WFOV model and image data.

The control sequence is configured to control at least one of a liquid fluid or an air fluid. The liquid fluid may be configured to be used for cleaning and the air fluid may be configured to be used for cleaning or drying, for example.

The control apparatus 120 may determine at least one control sequence, wherein air fluid is activated for a pre-defined time period. The control apparatus 120 may also determine at least one control sequence, wherein air fluid is activated for an undefined time period and to be disabled in response to another control sequence.

The control apparatus may determine at least one control sequence, wherein air fluid is activated based on route information, environmental information, sensor data, WFOV model or image data.so that air fluid is activated when entering dusty environment. Such activation may be triggered for example when entering from area 401 to 402 when based on available inputs the control apparatus 120 is configured to determine that area 402 is dusty area, for example.

The control apparatus 120 may be configured to be connectable to a public network 450, such as Internet, directly via local connection or via a wireless communication network 440 over a wireless connection 422. The wireless connection 422 may comprise a mobile cellular network, a satellite network or a wireless local area network (WLAN), for example. The wireless communication network 440 may be connected to a public data communication network 450, for example the Internet, over a data connection 441. The apparatus 120 may be configured to be connectable to the public data communication network 450, for example the Internet, directly over a data connection that may comprise a fixed or wireless mobile broadband access. The wireless communication network 440 may be connected to a server apparatus 430 of the system 400, over a data connection.

The control apparatus 120 may set up local connections within the vehicle system 110 with at least one capturing device and at least one automation device. The capturing device, such as a sensor, may be integrated to the apparatus 120, attached to the body of the vehicle and connected to the vehicle control system or arranged as separate sensor device and connectable to the network 450 over separate connection.

The apparatus 120 and its client application may be configured to log into a vehicle data service run on a server 430, for example. The server apparatus 430, 431 may be used to maintain any data, such as image data, route plan information, environmental data, or task related information, for example.

In an embodiment, real-time interaction may be provided between the apparatus 120 and the server 430 to collaborate for dynamic vision system related data over a network 450. Real-time interaction may also be provided between the apparatus 120 and the remote user device 460 to collaborate for any wide field of view model (WFOV) 121 related data over a network 450, 461.

The apparatus 120 may be connected to a plurality of different capturing devices and instruments and the apparatus 120 may be configured to select which sensor devices is actively collaborated with. A user/operator of the apparatus 120 or the remote user device 460 may need to be logged in with user credentials to a chosen service of the network server 130.

The system 400 may comprise a server apparatus 430, which comprises a storage device 431 for storing service data, service metrics and subscriber information, over data connection 451. The service data may comprise wide field of view model (WFOV) 121 related data, route related data, environmental data, image data, waypoint properties related data, vehicle related data, cleaning system data, fluid data, navigation information, configuration data, task information for the automation system, sensor data, user input data, real-time collaboration data, predefined settings, and attribute data, for example.

Alternatively, configuration information or application download information for any apparatus may be automatically downloaded and configured by the server 430. Thus, the user of the devices may not need to do any initialization or configuration for the service. The system server 430 may also take care of account creation process for the service, such sensor devices, apparatuses and users. Timing of the download may also be configured to be automatic and optimized in view of the vehicle travel plan. For example, download may be automatically taking place when the vehicle is under service in base.

The association of the devices can be one-time or stored persistently on any of the devices or the server 430.

An authentication of a sensor device or apparatus 120 on a system server 430 may utilize hardware or SIM credentials, such as International Mobile Equipment Identity (IMEI) or International Mobile Subscriber Identity (IMSI). The sensor device or apparatus 120 may transmit authentication information comprising IMEI and/or IMSI, for example, to the system server 430. The system server 430 authenticates the device by comparing the received authentication information to authentication information of registered users / devices / vehicles / apparatuses stored at the system server database 431, for example. Such authentication information may be used for pairing the devices and/or apparatuses to generate association between them for a vehicle data connection.

A service web application may be used for configuration of a system. The service web application may be run on any user device, admin device, or a remote-control device 460, such as a personal computer connected to a public data network, such as Internet 450, for example. The control apparatus 460 may also be connected locally to the apparatus 120 over a local connection 423 and may utilize the network connections of the apparatus 120 for configuration purposes. The service web application of the control apparatus may provide searching/adding instruments, determining attributes, device setup and configuration, for example. The service web application of the control apparatus 460 may be a general configuration tool for tasks being too complex to be performed on the user interface of the apparatus 120, for example.

A remote-control apparatus 460 may be authenticated and configuration data sent from the control apparatus 460 to the system server 430, 431, wherein configuration settings may be modified based on the received data. In an embodiment, the modified settings may then be sent to the apparatus 120 over the network 450 and the local connection or the wireless operator. The modified settings may also be sent to external devices correspondingly, through the apparatus 120 or directly over the network 450, for example.

The sensor device may be wireless or wired.

The system 400 may also comprise a plurality of satellites 410 in orbit about the Earth. The orbit of each satellite 410 is not necessarily synchronous with the orbits of other satellites and, in fact, is likely asynchronous. A global positioning system receiver apparatus such as the ones described in connection with preferred embodiments of the present invention is shown receiving spread spectrum Global Navigation Satellite System global positioning system (GNSS) satellite signals 412 from the various satellites 410.

The remote-control apparatus 460 may be configured to be operated by a remote operator of the vehicle system 110. The remote-control apparatus 460 may be arranged on a remote station, on the vehicle or on another vehicle, for example.

The input for an automatic route plan may come from a Remote Control Centre (RCC), the Remote Operation Centre (ROC) or the Fleet Operation Centre (FOC), depending on the level of autonomy. A mission manager process may receive the order and provide it to the route planning and execution process of the apparatus 120. The mission order contains at least destination and planned arrival time. Additional parameters i.e. driven by cargo (avoiding of areas with predicted danger state above a certain level) can be part of it. Based on input from 1) and 2) above and defined safety precautions / margins (i.e. safety corridor) an automatic routing algorithm will find in the first instance a geometrically optimal route from A to B. Geometric adaptations as well as the generation of the schedule by means of considering information's from 3), 5) and 6) will be performed by an optimization engine afterwards.

Various embodiments have been presented. It should be appreciated that in this document, words comprise, include and contain are each used as open-ended expressions with no intended exclusivity. If desired, the different functions discussed herein may be performed in a different order and/or concurrently with each other. Furthermore, if desired, one or more of the above-described functions may be optional or may be combined. Although various aspects of the invention are set out in the independent claims, other aspects of the invention comprise other combinations of features from the described embodiments and/or the dependent claims with the features of the independent claims as long as they fall into scope of the appended claims.

Another technical effect of one or more of the examples disclosed herein is that it enables performing the vehicle related tasks automatically in the safest and most efficient way possible. Optionally, while the operator may have oversight, the wide field of view model based automation may be principally handled by software in autonomous mode. Another technical effect of one or more of the example embodiments disclosed herein is that safety is improved since there is less likelihood of human error, and systems are efficiently utilized, and greater efficiency that allows reduced operating costs. Another technical effect of one or more of the example embodiments disclosed herein is that optimal cleaning of the camera devices is enabled.

Although various aspects of the invention are set out in the independent claims, other aspects of the invention comprise other combinations of features from the described embodiments and/or the dependent claims with the features of the independent claims as long as they fall into the scope of the appended claims.

It is also noted herein that while the foregoing describes example embodiments of the invention, these descriptions should not be viewed in a limiting sense. Rather, there are several variations and modifications, which may be made without departing from the scope of the present invention as defined in the appended claims.

## Claims

1. A surveillance apparatus (200) comprising:
a housing (20) with a front surface (F), wherein a camera device (151, 152, 153, 154) is arranged to operate through an opening of the front surface (F) having a protective window (6);
a spherical ring element (8) comprising the protective window (6);
an outer ring element (9) arranged at an outer side of the housing (20);
**characterized in that** the apparatus comprises:
an inner ring element (10) arranged at an inner side of the housing (20);
wherein the spherical ring element (8) is arranged between the inner ring element (10) and the outer ring element (9), and the inner and outer ring element (10, 9) are configured to allow pivotal movement of the spherical ring element (8);
the outer ring element (9) comprising a circular groove arranged on inner circumference of the outer ring element and a plurality of nozzles operationally connected to the circular groove and directed circumferentially towards an outer surface of the protective window (6) for cleaning the protective window with a liquid fluid or for cleaning or drying the protective window with air fluid; and
an outlet arranged on the front surface of the housing to guide the liquid fluid or air fluid to the circular groove of the outer ring element.

2. The apparatus (200) of claim 1, wherein in response to a control signal the fluid is changed between the air and the liquid.

3. The apparatus (200) of claim 1, wherein a plurality of camera devices (151-154) are arranged and configured to provide combined image data on at least one channel, wherein the channel is associated with at least two camera devices with substantially same field-of-view (FOV) angles but different line-of-sight (LOS) angles, and a wide field of view image data is configured to be generated using the combined image data.

4. The apparatus (200) of claim 3, wherein the first channel is a longwave infrared (LWIR) channel and the second channel is a visible spectrum (VIS) channel.

5. The apparatus (200) of any claim 1 to 4, further comprising a housing (20) comprising a front surface, wherein the plurality of camera devices (151-154) are arranged.

6. The apparatus (200) of any claim 1 to 5, wherein the at least two camera devices (151, 152) associated to the first channel are arranged vertically alongside each other.

7. The apparatus of any claim 1 to 6, wherein the at least two camera devices (153, 154) associated to the second channel are arranged vertically alongside each other.

8. The apparatus (200) of any claim 1 to 7, wherein the at least two camera devices (151, 152) associated to the first channel are arranged horizontally alongside the at least two camera devices (153, 154) associated to the second channel.

9. The apparatus (200) of any claim 1 to 8, wherein the camera device comprises at least one of the following: LWIR sensor, SWIR sensor, CMOS sensor, image Intensified CMOS, and CCD sensor.

10. The apparatus (2000) of claim 1 to 9, wherein the housing is rotatably and/or tiltably arranged to a vehicle, and wherein rotation and/or tilting of the housing (20) is controlled by the surveillance apparatus or its operator.

11. The apparatus (200) of any claim 1 to 10, wherein a field-of-view (FOV) angle of the output data is 120°.

12. The apparatus (200) of any claim 1 to 11, further comprising:
a communication interface (250);
at least one processor (210); and
at least one memory (220) including computer program code (230);
the at least one memory (220) and the computer program code (230) configured to, with the at least one processor (210), cause the apparatus to control guidance of the fluid to the circular groove of the outer ring element.

13. The apparatus of claim 12, wherein the at least one memory (220) and the computer program code (230) configured to, with the at least one processor (210), cause the apparatus to determine at least one control sequence; and control guidance of the fluid to the circular groove of the outer ring element based on the at least one control sequence.

14. The apparatus of claim 13, wherein the at least one control sequence is configured to control at least one of a liquid fluid or an air fluid, wherein the liquid fluid is configured to be used for cleaning, and wherein the air fluid is configured to be used for cleaning or drying.

15. The apparatus of any claim 12 to 14, wherein the at least one memory (220) and the computer program code (230) are further configured to cause the apparatus to determine at least one control sequence, wherein air fluid is activated for a predefined time period, and/or
wherein the at least one memory (220) and the computer program code (230) are further configured to cause the apparatus to determine at least one control sequence, wherein air fluid is activated for an undefined time period and to be disabled in response to another control sequence, and/or
wherein the at least one memory (220) and the computer program code (230) further configured to cause the apparatus to determine at least one control sequence, wherein air fluid is activated based on route information so that air fluid is activated when entering dusty environment.

## Patentansprüche

1. Überwachungseinrichtung (200) umfassend:
ein Gehäuse (20) mit einer Vorderfläche (F), wobei eine Kameravorrichtung (151, 152, 153, 154) so angeordnet ist, dass sie durch eine Öffnung der Vorderfläche (F) mit Schutzfenster (6) arbeitet;
ein kugelförmiges Ringelement (8), das das Schutzfenster (6) umfasst;
ein äußeres Ringelement (9), das an einer Außenseite des Gehäuses (20) angeordnet ist;
**gekennzeichnet dadurch, dass** die Einrichtung umfasst:
ein inneres Ringelement (10), das an einer Innenseite des Gehäuses (20) angeordnet ist;
wobei das kugelförmige Ringelement (8) zwischen dem inneren Ringelement (10) und dem äußeren Ringelement (9) angeordnet ist, und das innere und äußere Ringelement (10, 9) dazu ausgelegt sind, eine Schwenkbewegung des kugelförmigen Ringelements (8) zu gestatten;
wobei das äußere Ringelement (9) eine kreisrunde Nut, die am Innenumfang des äußeren Ringelements angeordnet ist, und eine Mehrzahl von Düsen umfasst, die mit der kreisförmigen Nut betriebswirksam verbunden sind und in Umfangsrichtung zu einer Außenfläche des Schutzfensters (6) hin ausgerichtet sind, um das Schutzfenster mit einem Flüssigkeitsfluid zu reinigen oder das Schutzfenster mit einem Luftfluid zu reinigen oder zu trocknen; und
einen an der Vorderfläche des Gehäuses angeordneter Auslass, um das Flüssigkeitsfluid oder Luftfluid zur kreisförmigen Nut des äußeren Ringelements zu führen.

2. Einrichtung (200) nach Anspruch 1, wobei das Fluid in Antwort auf ein Steuersignal zwischen Luft und Flüssigkeit umgeschaltet wird.

3. Einrichtung (200) nach Anspruch 1, wobei eine Mehrzahl von Kameravorrichtungen (151-154) so angeordnet und ausgelegt sind, dass sie kombinierte Bilddaten auf mindestens einem Kanal bereitstellen, wobei der Kanal mindestens zwei Kameravorrichtungen mit im Wesentlichen gleichen Sichtfeld-(FOV)-Winkeln, aber unterschiedlichen Sichtlinien-(LOS)-Winkeln zugeordnet ist und Bilddaten mit breitem Sichtfeld so ausgelegt sind, dass sie mit Hilfe der kombinierten Bilddaten generiert werden.

4. Einrichtung (200) nach Anspruch 3, wobei der erste Kanal ein Kanal für langwelliges Infrarot (LWIR) und der zweite Kanal ein Kanal für das sichtbare Spektrum (VIS) ist.

5. Einrichtung (200) nach einem Anspruch 1 bis 4, ferner umfassend ein Gehäuse (20), das eine Vorderfläche umfasst, in welchem die mehreren Kameravorrichtungen (151-154) angeordnet sind.

6. Einrichtung (200) nach einem Anspruch 1 bis 5, wobei die dem ersten Kanal zugeordneten mindestens zwei Kameravorrichtungen (151, 152) vertikal nebeneinander angeordnet sind.

7. Einrichtung nach einem Anspruch 1 bis 6, wobei die dem zweiten Kanal zugeordneten mindestens zwei Kameravorrichtungen (153, 154) vertikal nebeneinander angeordnet sind.

8. Einrichtung (200) nach einem Anspruch 1 bis 7, wobei die dem ersten Kanal zugeordneten mindestens zwei Kameravorrichtungen (151, 152) horizontal neben den dem zweiten Kanal zugeordneten mindestens zwei Kameravorrichtungen (153, 154) angeordnet sind.

9. Einrichtung (200) nach einem Anspruch 1 bis 8, wobei die Kameravorrichtung mindestens eines von Folgendem umfasst: LWIR-Sensor, SWIR-Sensor, CMOS-Sensor, bildintensivierter CMOS und CCD-Sensor.

10. Einrichtung (2000) nach einem Anspruch 1 bis 9, wobei das Gehäuse drehbar und/oder neigbar an einem Fahrzeug angeordnet ist, und wobei die Drehung und/oder Neigung des Gehäuses (20) durch die Überwachungseinrichtung oder ihren Bediener gesteuert wird.

11. Einrichtung (200) nach einem Anspruch 1 bis 10, wobei ein Sichtfeld-(FOV)-Winkel der Ausgabedaten 120° beträgt.

12. Einrichtung (200) nach einem Anspruch 1 bis 11, ferner umfassend:
eine Kommunikationsschnittstelle (250);
mindestens einen Prozessor (210); und
mindestens einen Speicher (220), der einen Computerprogrammcode (230) umfasst;
wobei der mindestens eine Speicher (220) und der Computerprogrammcode (230) dazu ausgelegt sind, mit dem mindestens einen Prozessor (210) die Einrichtung dazu zu veranlassen, die Führung des Fluids zur kreisförmigen Nut des äußeren Ringelements zu steuern.

13. Einrichtung nach Anspruch 12, wobei der mindestens eine Speicher (220) und der Computerprogrammcode (230) dazu ausgelegt sind, mit dem mindestens einen Prozessor (210) die Einrichtung dazu zu veranlassen, mindestens eine Steuersequenz zu bestimmen; und die Führung des Fluids zur kreisförmigen Nut des äußeren Ringelements auf Grundlage der mindestens einen Steuersequenz zu steuern.

14. Einrichtung nach Anspruch 13, wobei die mindestens eine Steuersequenz dazu ausgelegt ist, ein Flüssigkeitsfluid und/oder ein Luftfluid zu steuern, wobei das Flüssigkeitsfluid so ausgelegt ist, dass es zur Reinigung verwendet wird, und wobei das Luftfluid so ausgelegt ist, dass es zur Reinigung oder Trocknung verwendet wird.

15. Einrichtung nach einem Anspruch 12 bis 14, wobei der mindestens eine Speicher (220) und der Computerprogrammcode (230) ferner dazu ausgelegt sind, die Einrichtung dazu zu veranlassen, mindestens eine Steuersequenz zu bestimmen, wobei das Luftfluid für einen vorbestimmten Zeitraum aktiviert wird, und/oder
wobei der mindestens eine Speicher (220) und der Computerprogrammcode (230) ferner dazu ausgelegt sind, die Einrichtung dazu zu veranlassen, mindestens eine Steuersequenz zu bestimmen, wobei das Luftfluid für einen unbestimmten Zeitraum aktiviert wird und in Antwort auf eine andere Steuersequenz deaktiviert wird, und/oder
wobei der mindestens eine Speicher (220) und der Computerprogrammcode (230) ferner dazu ausgelegt sind, die Einrichtung dazu zu veranlassen, mindestens eine Steuersequenz zu bestimmen, wobei das Luftfluid auf Grundlage von Routeninformationen aktiviert wird, so dass das Luftfluid bei Eintritt in eine staubige Umgebung aktiviert wird.

## Revendications

1. Appareil de surveillance (200) comprenant :
un boîtier (20) avec une face avant (F), dans lequel un dispositif de caméra (151, 152, 153, 154) est disposé de manière à fonctionner à travers un orifice de la face avant (F) comprenant une fenêtre protectrice (6);
un élément annulaire sphérique (8) comprenant la fenêtre protectrice (6);
un élément annulaire extérieur (9) disposé d'un côté extérieur du boîtier (20);
**caractérisé en ce que** l'appareil comprend :
un élément annulaire intérieur (10) disposé d'un côté intérieur du boîtier (20);
dans lequel l'élément annulaire sphérique (8) est disposé entre l'élément annulaire intérieur (10) et l'élément annulaire extérieur (9) et les éléments annulaires intérieur et extérieur (10, 9) sont configurés pour autoriser un mouvement pivotant de l'élément annulaire sphérique (8);
l'élément annulaire extérieur (9) comprenant une rainure circulaire disposée sur la circonférence intérieure de l'élément annulaire extérieur et une pluralité de buses reliées opérationnellement à la rainure circulaire et dirigées vers une face extérieure de la fenêtre protectrice (6) pour nettoyer la fenêtre protectrice avec un fluide liquide ou pour nettoyer ou sécher la fenêtre protectrice avec un fluide d'air; et
une sortie disposée sur la face avant du boîtier pour guider le fluide liquide ou le fluide d'air vers la rainure circulaire de l'élément annulaire extérieur.

2. Appareil (200) selon la revendication 1, dans lequel le fluide est basculé entre air et liquide en réponse à un signal de commande.

3. Appareil (200) selon la revendication 1, dans lequel une pluralité de dispositifs de caméra (151-154) sont disposés et configurés pour fournir des données d'image combinées sur au moins un canal, ledit canal étant associé à au moins deux dispositifs de caméra avec des angles de champ de vue (FOV) essentiellement identiques mais des angles de ligne de visée (LOS) différents, et des données d'image à large champ de vue étant configurées pour être générées à l'aide des données d'image combinées.

4. Appareil (200) selon la revendication 3, dans lequel le premier canal est un canal pour l'infrarouge à ondes longues (LWIR) et le deuxième canal est un canal pour le spectre visible (VIS).

5. Appareil (200) selon une revendication quelconque 1 à 4, comprenant également un boîtier (20) comprenant une face avant, dans lequel la pluralité de dispositifs de caméra (151-154) sont disposés.

6. Appareil (200) selon une revendication quelconque 1 à 5, dans lequel lesdits au moins deux dispositifs de caméra (151, 152) associés au premier canal sont disposés verticalement les uns à côté des autres.

7. Appareil selon une revendication quelconque 1 à 6, dans lequel lesdits au moins deux dispositifs de caméra (153, 154) associés au deuxième canal sont disposés verticalement les uns à côté des autres.

8. Appareil (200) selon une revendication quelconque 1 à 7, dans lequel lesdits au moins deux dispositifs de caméra (151, 152) associés au premier canal sont disposés horizontalement à côté desdits au moins deux dispositifs de caméra (153, 154) associés au deuxième canal.

9. Appareil (200) selon une revendication quelconque 1 à 8, dans lequel le dispositif de caméra comprend au moins l'un de ce qui suit : capteur LWIR, capteur SWIR, capteur CMOS, CMOS à intensification d'image et capteur CCD.

10. Appareil (2000) selon une revendication quelconque 1 à 9, dans lequel le boîtier est disposé sur un véhicule de manière orientable et/ou inclinable, et dans lequel l'orientation et/ou l'inclinaison du boîtier (20) est commandée par l'appareil de surveillance ou son opérateur.

11. Appareil (200) selon une revendication quelconque 1 à 10, dans lequel un angle de champ de vue (FOC) des données de sortie est de 120°.

12. Appareil (200) selon une revendication quelconque 1 à 11, comprenant également :
une interface de communication (250);
au moins un processeur (210); et
au moins une mémoire (220) comportant un code de programme informatique (230);
ladite au moins une mémoire (220) et ledit code de programme informatique (230) étant configurés pour amener l'appareil, avec ledit au moins un processeur (210), à commander le guidage du fluide vers la rainure circulaire de l'élément annulaire extérieur.

13. Appareil selon la revendication 12, dans lequel ladite au moins une mémoire (220) et ledit code de programme informatique (230) sont configurés pour amener l'appareil, avec ledit au moins un processeur (210), à déterminer au moins une séquence de commande; et à commander le guidage du fluide vers la rainure circulaire de l'élément annulaire extérieur sur la base de ladite au moins une séquence de commande.

14. Appareil selon la revendication 13, dans lequel ladite au moins une séquence de commande est configurée pour commander au moins un parmi un fluide liquide ou un fluide d'air, ledit fluide liquide étant configuré pour être utilisé pour le nettoyage, et ledit fluide d'air étant configuré pour être utilisé pour le nettoyage ou le séchage.

15. Appareil selon une revendication quelconque 12 à 14, dans lequel ladite au moins une mémoire (220) et ledit code de programme informatique (230) sont également configurés pour amener l'appareil à déterminer au moins une séquence de commande, le fluide d'air étant activé pour une période de temps prédéfinie, et/ou
dans lequel ladite au moins une mémoire (220) et ledit code de programme informatique (230) sont également configurés pour amener l'appareil à déterminer au moins une séquence de commande, le fluide d'air étant activé pour une période de temps indéfinie et/ou à désactiver en réponse à une autre séquence de commande, et/ou
dans lequel ladite au moins une mémoire (220) et ledit code de programme informatique (230) sont également configurés pour amener l'appareil à déterminer au moins une séquence de commande, le fluide d'air étant activé sur la base d'informations de route de telle sorte que le fluide d'air soit activé lors de l'entrée dans un environnement poussiéreux.
